(19)

Europäisches Patentamt
European Patent Office
Office européen des brevets

(11) **EP 2 187 239 A1**

(12) **EUROPEAN PATENT APPLICATION**

(43) Date of publication:
**19.05.2010 Bulletin 2010/20**

(21) Application number: **08275073.8**

(22) Date of filing: **13.11.2008**

(51) Int Cl.:
**G01S 17/74** (2006.01)     **G01N 21/63** (2006.01)
**G02B 5/126** (2006.01)

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **BAE Systems PLC**
**6 Carlton Gardens**
**London SW1Y 5AD (GB)**

(72) Inventor: **Laycock, Leslie Charles**
**Chelmsford**
**Essex CM2 8HN (GB)**

(74) Representative: **BAE SYSTEMS plc**
**Group IP Department**
**P.O. Box 87**
**Warwick House**
**Farnborough Aerospace Centre**
**Farnborough**
**Hampshire GU14 6YU (GB)**

(54) **Identification device**

(57)     An identification device 10 comprises a retroreflector 12 for receiving an incident beam of radiation 14 from a detection unit 16 remote from the device and retroreflecting the incident beam back to the detection unit so that the device can be identified.

The retroflector comprises a substantially spherical graded refractive index lens 20; a reflective part 22 for retroreflecting the incident radiation beam passing through the lens; and a tagging layer 24 disposed between the lens and the reflective part, wherein the tagging layer is selected to cause the retroreflected beam to comprise a spectrum of radiation which is characteristic of the device and which can be identified by the detection unit by comparison with a predetermined spectrum.

FIG. 1

## Description

This invention relates to an identification device which is identifiable by a detection unit which is remote from the device. The invention also relates to a system comprising such an identification device and a detection unit, and to a method of identifying such an identification device.

Identification techniques include product authentication, for instance, for verifying that a product has been manufactured by an approved manufacturer and is not counterfeit. US 6,610,351 discloses a method of product authentication in which a product is provided with an active substance which emits a characteristic spectrum of radiation when irradiated by a beam of radiation so that the characteristic spectrum can be compared with a stored spectrum for authentication of the product. The method relies upon detection of the characteristic spectrum using a sensor which is positioned relatively close to the product.

It is not always practical or possible to test a product in close proximity. There is therefore a requirement for a technique suitable for identification of products, objects or persons by a detection unit which is remote therefrom. The term "remote" herein means at a distance of more than about 5 metres.

The present invention provides an identification device comprising a retroreflector for receiving an incident beam of radiation from a detection unit remote from the device and retroreflecting the incident beam back to the detection unit so that the device can be identified, the retroflector comprising: a substantially spherical graded refractive index lens; a reflective part for retroreflecting the incident radiation beam passing through the lens; and a tagging layer disposed between the lens and the reflective part, wherein the tagging layer is selected to cause the retroreflected beam to comprise a spectrum of radiation which is characteristic of the device and which can be identified by the detection unit by comparison with a predetermined spectrum.

The present invention also provides a system comprising such an identification device and the detection unit.

The invention also provides a method of identifying an identification device, said identification device comprising a retroreflector which comprises: a substantially spherical graded refractive index lens; a reflective part for retroreflecting an incident radiation beam passing through the lens; and a tagging layer disposed between the lens and the reflective part, wherein the tagging layer is selected to cause a retroreflected beam to comprise a spectrum of radiation which is characteristic of the device, said method comprising the steps of: irradiating said device from a remote location with an incident beam of radiation; detecting the retroreflected beam of radiation returned from the device; comparing a spectrum of radiation in the retroreflected beam with a predetermined spectrum; and determining an authenticity of the device dependent on a similarity of said detected spectrum with said predetermined spectrum.

In order that the present invention may be well understood, embodiments thereof, which are given by way of example only, will now be described in greater detail, with reference to the accompanying drawings, in which:

Figure 1 is schematic representation of a system comprising an identification device and a detection unit positioned remote from the device;

Figure 2 is a diagram explaining Raman scattering;

Figure 3 shows a nanoparticle comprising an active substance and a metallic substance in a layered configuration;

Figure 4 shows a tagging layer comprising a plurality of gold nanoshells;

Figure 5 shows the measured and calculated extinction spectra of nanoshells; and

Figure 6 shows a schematic view of the components of the detection unit.

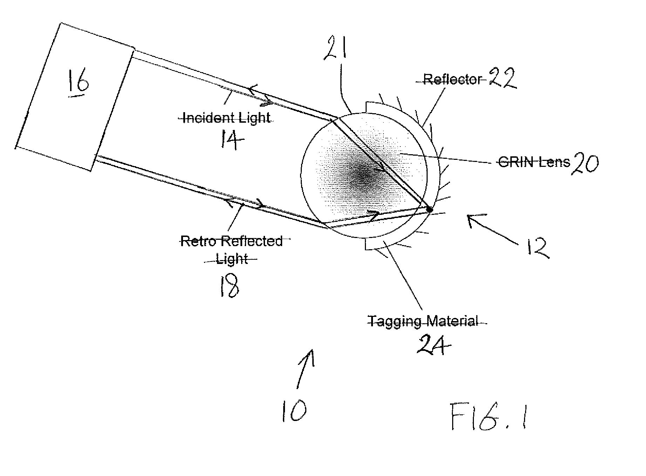

Referring to Figure 1, an identification device 10 is shown which comprises a retroreflector 12 for retroreflecting an incident beam of radiation 14 emitted from a detection unit 16 which is remote from the device so that a retroreflected beam 18 can be received by the detection unit and a characteristic of the retroflected beam can be identified. The retroflector 12 comprises a substantially spherical graded refractive index lens 20 (GRIN-sphere lens) and a reflective part 22 for reflecting the incident radiation beam passing through the lens.

A known retroreflector employs glass spheres, or cemented hemispheres, in order to provide retroreflection for paraxial incident rays. Such devices can be made very small (for example with sub-millimetre diameters) and offer a very wide field of view, including a complete hemisphere or more in a single component. Furthermore, single spheres can be manufactured in quantity at low cost.

GRIN lenses avoid some of the disadvantages with spherical lenses having constant refractive index. The main disadvantage is that the reflected radiation is subject to severe spherical aberration for non-paraxial rays, and this can strongly reduce the far-field intensity of the reflected beam measured on-axis. It also leads to significant beam divergence, making the reflection visible far from the axis, which can be undesirable in some applications, for example in free-space communication where privacy is desired.

A GRIN lens exhibits gradual variations in refractive index through its volume. An example is the so-called "GRIN-rod" lens, which is a graded-index lens with cylindrical symmetry and radial parabolic index distribution. See S. Nemoto and J. Kida, 'Retroreflector using gradient-index rods' Appl. Opt. 30(7), 1 Mar 1991, p. 815-822.

Sphere lenses with refractive index distributions possessing spherical symmetry are known as 'GRIN-sphere' lenses, having a spherically symmetric refractive index distribution in which the refractive index varies gradually across a radial cross-section. Such lenses are known to exhibit improved spherical aberration compared to uniform sphere lenses. See Y. Koike, A. Kanemitsu, Y. Shioda, E. Nihei and Y. Ohtsuka, 'Spherical gradient-index polymer lens with low spherical aberration' Appl. Opt. 33(17), 1 Jun 1994, p. 3394-3400.

Referring to Figure 1, the lens 20 has a mechanical surface, shown as a solid circle 21. The incident beam of radiation 14 passes through a first hemisphere of the lens. In order to improve the optical characteristics of the retroreflector, the lens is clad in, or otherwise coated with, a transparent material (not shown) having a uniform refractive index of a particular, desired value. The transparent material has a uniform thickness, and has an outer spherical surface which is arranged concentric with the outer surface of the lens. The surface of the transparent material forms the entrance face of the device. Although not shown in Figure 1, the entrance face of the transparent material may be provided with an anti-reflective coating, applied in any convenient manner.

The reflective part 22 covers an outer surface of the lens on the side opposite the entrance face, to provide retroreflection of the incident rays 14 as shown. For optimum field of view, the reflective part 22 covers approximately a hemisphere on the outer surface.

The lens 2 may be made of suitable polymer materials, such as benzyl methacrylate or similar materials, or glass. The desired refractive index distribution may be obtained by any known technique, such as diffusion of suitable materials within the sphere, or photo-inscription in photosensitive material using, for example, ultra-violet sources.

The transparent material may be made of a suitable plastic, for example polymethyl methacrylate, or glass.

The reflective part 22 may be metallic, for example aluminium, to provide broad spectral reflection.

In use, the retroreflector 12 reflects radiation back to the detection unit 16 in a direction parallel with and opposite to the direction of propagation of the incident beam 14, with a minimum scattering of radiation. The arrangement of the lens 20 and the hemi-spherical reflecting part 22 is capable of reflecting radiation over a wide range of angles of incidence, unlike a planar mirror which would reflect radiation only if the plane of the mirror is exactly perpendicular to the wave front, having a zero angle of incidence. Accordingly, the identification device (which is normally fitted to a surface of a product for identification) can be irradiated by the detection unit 16 from any one of a plurality of angles and still reflect the incident beam back to the detection unit. Such an arrangement is useful because identification of products or objects by a detection unit may be required from multiple different perspectives relative to the product.

A tagging layer 24 is disposed between the lens 20 and the reflective part 22. The tagging layer 24 is selected to cause the retroreflected beam 18 to comprise a spectrum of radiation which is characteristic of the device and which can be identified by the detection unit 16 by comparison with a predetermined spectrum. The tagging layer 24 comprises one or more optically active substances which alter the wavelength of the incident beam of radiation producing a spectrum of wavelengths in the retroreflected beam which is characteristic of the identification device. For example, the detection unit may irradiate the identification device with a laser having a wavelength in the visible green waveband and receive retroreflected radiation from the identification device in the yellow waveband. If the detection unit expects to receive retroreflected light in the yellow waveband then the identification is identified. Such a determination can be made by a user watching the visible retroreflected return or by sensing equipment as described in more detail below.

The active substance or substances of the tagging layer may for instance emit absorption spectra when ultraviolet, visible, near infrared or middle-infrared light incident upon an active substance is absorbed by the substances. Suitable materials include fluorescent dyes or rare earth ions such as erbium and holmium, and quantum dots.

Further, fluorescent substances can be detected by illuminating a material with light of an appropriate excitation wavelength (usually 200-600 nm) and by subsequent detection of the resultant spectral emissions. Suitable fluorescent substances include the Rhodamine 6G and p-Mercaptoaniline (pMA). Further, the active substance may produce Raman spectra arising as a result of inelastic scattering of light incident upon a sample of the substance. In this regard, the Raman effect occurs when small portions of photons in a laser light beam gain or loose some discrete amounts of energy upon colliding with vibrating molecules of the substance. This energy exchange alters the wavelength of the incident (exciting) light and the new wavelengths that are emitted constitute the Raman spectrum. Typical strong Raman active substances comprise molecules with C=C, C-H, C=N and = (C-H) bonds. In addition to their fluorescence Rhodamine 6G and p-Mercaptoaniline (pMA) are Raman active substances.

The spectral emissions emanating from the tagging layer 24 are amplified by one or more of the following techniques to allow detection remotely by the detection unit. First, the retroreflector 12 reduces scattering of radiation from the retroreflected beam 18 in a direction away from the detection unit 16 thereby increasing the amount of radiation received by the detection unit. Second, the wavelength of the incident light 14 is tuned to the excitation wavelength of the tagging layer 24. Third, the spectral emissions emanating from the tagging layer 24 are in themselves enhanced. Fourth, the thickness of the tagging layer 24 is selected to form a resonance cavity in accordance with the wavelength of the incident radiation so that resonance occurs in the tagging layer.

Manufacture of the tagging layer 24 will now be described giving suitable materials and their alternatives.

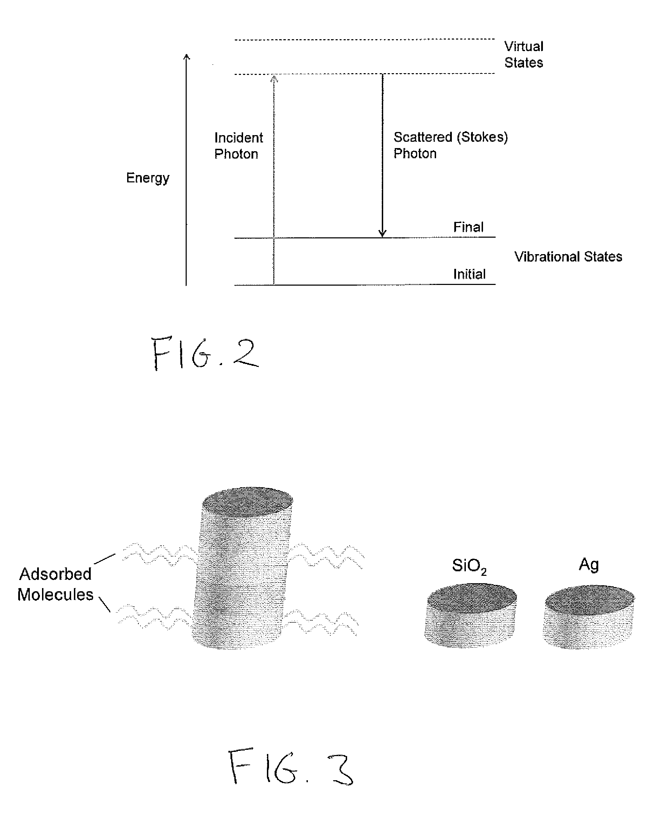

When light is scattered from a molecule the majority of photons are elastically scattered. However, a very small fraction (1 in 106-108) are scattered inelastically, at a different (usually longer) wavelength, see Figure 2. This process is termed the Raman effect. It can occur with a change in vibrational, rotational or electronic energy of a molecule, although it is the vibrational Raman effect that is the most widely studied. The difference in energy between the incident photon and the Raman scattered photon is equal to the energy of a vibration of the scattering molecule, and a plot of intensity of scattered light as a function of energy difference is known as a Raman spectrum. Monitoring of such a Raman spectrum can be used to detect the presence of as little as a few molecules of a compound. However, embodiments of the present invention do not make use of the Raman effect to detect the presence of small number of molecules but rather to identify a product or subject loaded with relatively large amounts of an active substance.

At room temperature the thermal population of vibrational excited states is low, and the initial state is the ground state. Incident photons contribute to Raman scattering when they interact with electrons in a vibrational state, where the electron is raised to an energy level which is not permitted to exist in the medium. Since electrons are not permitted to occupy this energy state, it is referred to as a 'virtual' state and the electron must 'instantaneously' return to a very similar, but perhaps not identical, state. The scattered photon normally has a lower energy and consequently a longer wavelength (known as the Stokes wavelength) than the exciting photon. Typical strong Raman active substances comprise molecules with distributed electron clouds, such as carbon-carbon double bonds. In active substances, the electron cloud is easily distorted by an external electric field resulting in a large change in induced dipole moment.

For a single molecule, the power of the Stokes wave is given by the integration of:

$$d^2 P_S = \frac{d\sigma}{d\Omega} I_O \cos^3 (\beta) d\beta \, d\rho$$

where $I_O$ is the intensity of the incident light, $\beta$ is the angle between the wave vector of the incident and that of the scattered waves, and $\dfrac{d\sigma}{d\Omega}$ is known as the Raman cross section given by:

$$\frac{d\sigma}{d\Omega} = \frac{\alpha_R^2}{16\pi^2 \, \varepsilon_O^2 \, c^4} \cdot \omega_S^4$$

where $\varepsilon_O$ is the dielectric constant of the vacuum, $\alpha_R$ is the polarisability of the molecule, $c$ denotes the speed of light in vacuum and $\omega S$ is the angular frequency of the Stokes wave.

As noted earlier, the normal Raman process is very weak, and typical cross-sections are of the order of $10^{-30}$ cm2/molecule.sr in the visible region of the spectrum. This is equivalent to a single molecule, intensely illuminated by a 100 mW laser beam focussed down to 1 $\mu$m2 scattering one photon per hour. It should also be noted that like other scattering processes, the cross section is dependent on wavelength, resulting in about a further two orders of magnitude reduction at 1.5 $\mu$m.

However, in recent years two enhancement processes have been applied to the Raman process that greatly increase the cross-section, by up to a factor of $10^{14}$. These enhancement processes described in more detail below allow the detection of individual molecules, although in embodiments of the present invention the tagging layer 24 comprises much larger amounts of an active substance so that Raman spectral emissions can be detected remotely.

In a first enhancement process, Resonance Raman Scattering, or RRS, occurs when the excitation laser frequency is selected such that it resonates with electronic excited states of the active substance or substances. The intensity of Raman bands that originate from electronic transitions can be enhanced by factors up to $10^6$. The chromophoric group, which is responsible for the molecules' colouration, experiences the greatest level of enhancement, and as a consequence, dyes such as Rhodamine 6G can exhibit resonant cross sections as high as ~10 cm$^{-24}$ / molecule.sr when excited with green light in the region of 530 nm.

RRS does not cut-in at a sharply defined wavelength, and an order of magnitude enhancement can be observed even if the exciting laser is within a few hundred wave numbers (cm$^{-1}$) below the electronic transition of a molecule.

In combination with the first enhancement process, Surface Enhanced Resonance Raman Scattering (SERRS) is a powerful tagging technique developed for ultra sensitive (single molecule) detection of biological and chemical agents. See for instance in this regard the published paper 'Distance Detection using Raman Scattering - A New Tagging Technology', W.E. Smith et al, SPIE Vol. 6402 (2006), the contents of which are hereby incorporated by reference. The paper describes how SERRS may be implemented.

SERRS combines surface enhancement with RRS. Surface enhancement uses silver or gold nanoparticles, that can be embedded in micron sized polymer beads in order to provide a uniform SERRS response. In this latter regard, see 'SERRS - Active Nanoparticle-Polymer Beads for Ultra-Sensitive Biodiagnostic Applications', R.J. Stokes et al., Micro & Nano Letters 1 (1) 2006, the contents of which are hereby incorporated by reference.

Surface enhancement occurs when the Raman active molecule is adsorbed or is located within a few (less than ten) Angstroms of a structured metal surface in the tagging layer 24. Preferably, the metal is silver or comprises silver. Alternatively, the metal is, or comprises, gold or copper. The process is known as Surface Enhanced Raman Scattering (SERS) and arises from two mechanisms. The first mechanism is an enhanced electromagnetic field produced at the surface of the metal. When the wavelength of the incident light is close to the plasma wavelength of the metal, conduction electrons in the metal surface are excited into a state called a surface plasmon resonance. As a consequence, molecules adsorbed or in close proximity to the surface experience an exceptionally large electromagnetic field. Vibrational modes normal to the surface are the most strongly enhanced. The second mechanism is by the formation of a charge-transfer complex between the surface and the adsorbed molecule. Resonance with the electronic transitions of these charge transfer complexes generates the enhancement factor, and molecules with lone pair electrons or pi-clouds show the strongest effect.

The intensity of the surface plasmon resonance is dependent on many factors including the wavelength of the incident light and the morphology of the metal surface. The former should match the plasma wavelength of the metal. For instance, the wavelength of the excitation radiation should be in the UV range for 5 $\mu$m silver particles, however recent research has sought to extend this to longer wavelengths using nanofabrication methods. Several research groups have experimentally demonstrated well-defined plasmon resonances by the precise fabrication of nanoprisms, nanorings, nanoplasmonic resonantors and nanoshells. It is generally considered important to manufacture these nanostructures as uniformly as possible in order to avoid variations in enhancement at different locations. Their shape also plays a part; more complex structures with sharp edges or corners, for example nanoprisms, can exhibit strong local electromagnetic fields due to the lightning bolt effect. Resonant wavelength can be selected by the size and material of the structure.

Nanoplasmonic resonators exhibit some of the greatest enhancement factors from an individual nanoparticle, with values of $6 \times 10^{10}$. A schematic of their structure is shown in Figure 3. Typically, alternate 100 nm diameter layers of silver (20 nm thick) and $SiO_2$ (5 nm thick) are stacked to form the resonator. The sandwiched $SiO_2$ layer works as a tuning parameter for plasmon resonant frequency, while the top $SiO_2$ layer works as a capping layer that forces the molecules to be adsorbed on the sidewalls of the resonator where the field is strongest. The active substance p-Mercaptoaniline (pMA) is used. It is estimated that each Tunable Nano-Plasmonic Resonator (TNPR) self-assembled $5 \times 10^4$ pMA molecules. Resonant peaks are in the green region (~530 nm).

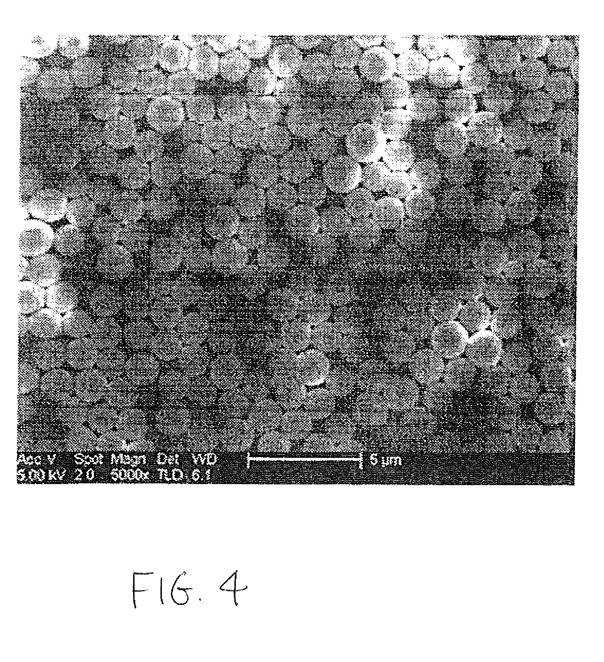

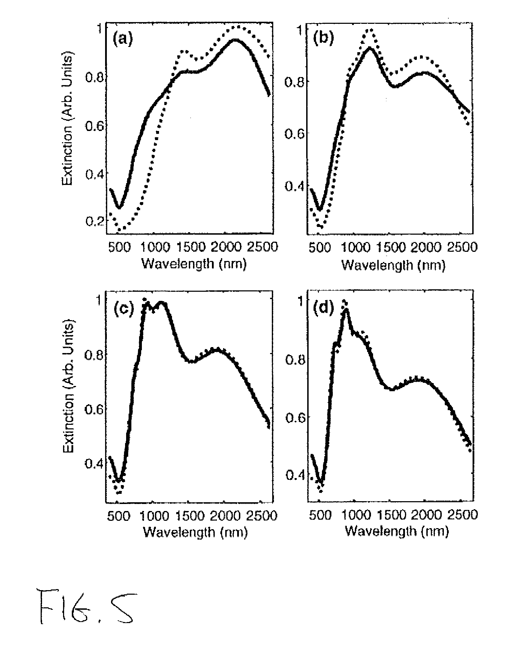

The tagging layer 24 may comprise gold nanoshells consisting of a dielectric core coated with a thin (<20 nm) shell of gold - see 'Infrared Extinction Properties of Gold Nanoshells', S.J. Oldenburg et al, APL, 75 (19) 1999, the contents of which are hereby incorporated by reference. Gold nanoshells are advantageous because their optical resonance depends sensitively on their core radius and shell thickness. These nanoparticles have been fabricated with a peak optical extinction (due to the collective oscillation of the free surface electrons) that can be varied across the NIR region from 800 nm to 2.2 $\mu$m, compared to the visible resonance of homogeneous spherical gold particles, see Figure 4. The plasmon resonance is a function of the core radius to shell thickness ratio. By increasing the size of the core and reducing the thickness of the shell, it is possible to shift the peak plasma resonance to wavelengths >2 $\mu$m. Figure 5 shows the measured and calculated extinction spectra of nanoshells with a silica core radius of 210 nm and shell thicknesses of 6, 10.5, 15 and 20 mm. Two peaks can be observed in each plot; those at the lower wavelengths (higher frequency) are due to quadrupolar resonances, and those at higher wavelengths are due to dipolar resonances. The dipole and quadrupole modes have different distributions of local electric field intensity on the surface of the particles, which affects the SERRS enhancement.

Gold nanoshells are also useful as building blocks to realise self-assembled photonic crystals which can be used to enhance other potential IR tagging processes such as fluorescence.

In addition to the dramatically increased near-fields generated by the plasmon resonance, roughness inherent in metal nanospheres due to the fabrication process also provides a SERRS enhancement mechanism. In particular, pores in very thin shells can generate intense local fields that have been shown to give an additional SERRS signal.

One example of the constitution of the tagging layer 24 is now described. Such a tagging layer 24 is adapted for excitation by an incident beam having a wavelength of 1.06 $\mu$m. The tagging layer comprises gold nanoshells having a silica cores of either radii 75 and 170 nm with 10 nm gold coating. Small quantities of p-MA were added to the nanoshells. SERRS enhancements of ~2 x 105 are achieved with such a tagging layer. Alternative active substances which may be added to the nanoshells are pyridene and benzoic acid although these substances exhibit lower enhancement which is attributed to the formation of a charge-transfer complex between the molecule and the gold surface.

The active substance may comprise individual fluorescing nanoparticles, or quantum dots (QDs). QDs can be adapted to emit at any wavelength in the visible and IR regions, and can be used in liquid solution, dyes, paints, epoxies and sol gels. Since QDs are based on inorganic particles, they are inherently more photo stable than organic molecules, and as such they can survive orders of magnitude longer than organic fluorescent dyes under intense illumination. QDs also possess large two-photon absorption cross-sections that allow for narrowband visible light to be emitted when long wavelength IR lasers are focussed onto tagging layers comprising QDs. QDs offer very narrow emissions, enabling the possibility of multiplexing to provide a coded response.

QDs based on PbS nanoparticles can exhibit a high photoluminescence quantum efficiency of up to 30%. Controlled variation in colloidal dot diameter from 1 to 10 nm producers excitonic absorption peaks tunable between 850 nm and 1800 nm. Colloidal QDs synthesized in solution can be coated onto any surface; by utilising short 'capping' ligands (such as butylamine) packing densities of 30% can be obtained. Solid thin films of QDs (with no matrix e.g. polymer on sol-gel) are available up to several microns thick, exhibit low optical loss with a surface roughness of less than 10 nm. The favoured technique is to spin coat a chloroform solution of butylamine capped QDs onto a silica surface. The refractive index of the resulting layer is 1.7-1.85, which enables the thin film to act as a waveguide. The very high density of QDs so formed result in absorption coefficients with magnitudes of hundreds cm$^{-1}$. Fluorescent quantum efficiencies in such films are of the order of 10%, and lasing operation at 1.53 $\mu$m has been observed by fabricating a smooth, low-scattering-loss thin film of 5 nm QDs inside a glass capilliary; this resulted in a 'whispering gallery' mode laser with a well-defined threshold. At room temperature, the latter was of the order of a few mJ/cm$^2$.

The active substance may comprise fluorescent rare earth ions such as erbium and holmium, which may be applied in oxide form as a paste to the back surface of the retro reflector.

The tagging layer 24 may comprise a single active substance for allowing the detection unit 16 to identify whether or not a product or other object is authentic. In this regard, if in use the detection unit detects the presence of an expected active substance, an authentic determination can be made. Alternatively, the tagging layer 24 may comprise a plurality of active substances so that more sophisticated identification can be made for example for distinguishing between more than one authentic product. For instance, products in a product line can be provided with identification devices which allow identification by the detection unit of each product or type of product in the product line. In this way, the plurality of active substances allow multiplexing. By combining two or more dye-containing-chromophores, a complex spectral signature can be synthesised. This provides robust coding without the need for any spatial or temporal (intensity) information. In the visible region, detection can be implemented by COTS notch and edge filters combined with a CMOS camera. The concept has been demonstrated using a low power visible laser over a distance of 20 m (TRL 2/3).

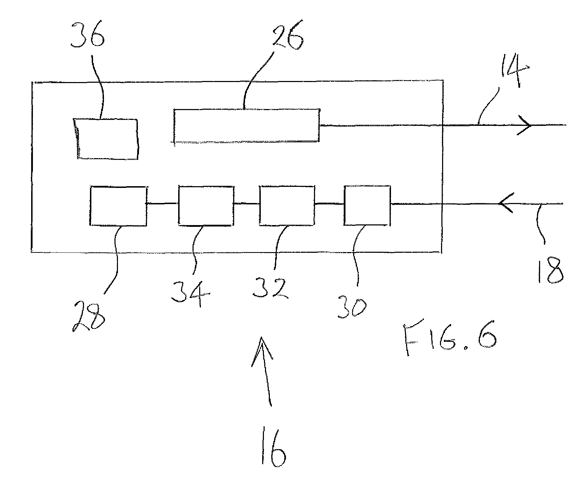

Referring to Figure 6, the detection unit 16 comprises a radiation source 26 for generating the incident beam of radiation 14 and directing it towards the identification device.

The radiation source 26 may be adapted to generate incident radiation with an excitation wavelength in the visible region or alternatively a wavelength in the NIR region may be preferred. IR and NIR excitation also helps to reduce background fluorescence and photo induced degradation of the adsorbed molecules.

In one arrangement, the source of radiation 26 generates monochromatic radiation, such as laser light. Preferably, the wavelength is either in the NIR, e.g. 1.06 $\mu$m as generated by a Nd based laser or in the green e.g. 530 nm as generated by a frequency doubled Nd based laser. This would also be preferably operated in a high repetition rate, Q-switched mode such that the target is illumination by a large number of short intense pulses.

In use, the radiation incident on the identification device 10 is focussed by the graded index spherical lens 20 into the tagging layer where it is absorbed and re-emitted at a different wavelength or wavelengths. By using more than one active substance, a spectrum of wavelengths characteristic of the identification device can be produced. The reflected radiation is collected by the graded index spherical lens and directed back towards the interrogation unit exploiting the retroreflective properties of the identification device. The interrogation unit comprises a detector for detecting the retroreflected beam of radiation. The detector comprises a receiver lens 30 which collects the retroreflected radiation. The radiation is then analysed by a diffraction grating 32 to split it into its various spectral components. These components are then detected using an array of photo detectors 34, and the signals digitised and processed by processing unit 28 such that the wavelength and magnitude of the components can be correlated with spectra stored within the memory, or store, 36 of the interrogation unit. If a match occurs, the unit displays the identification of the device.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

**1.** An identification device comprising a retroreflector for receiving an incident beam of radiation from a detection unit remote from the device and retroreflecting the incident beam back to the detection unit so that the device can be identified, the retroflector comprising:

a substantially spherical graded refractive index lens;
a reflective part for retroreflecting the incident radiation beam passing through the lens; and
a tagging layer disposed between the lens and the reflective part, wherein the tagging layer is selected to cause the retroreflected beam to comprise a spectrum of radiation which is characteristic of the device and which can be identified by the detection unit by comparison with a predetermined spectrum.

**2.** A device according to claim 1, wherein the tagging layer comprises one or more active substances which alter the wavelength of the incident beam of radiation producing a spectrum of wavelengths in the retroreflected beam which is characteristic of the identification device.

**3.** A device according to claim 2, wherein said active substance absorbs radiation at a first wavelength and emits radiation at a second longer wavelength.

**4.** A device according to claim 2, wherein said active substance is fluorescent and emits visible light at a second wavelength when irradiated by radiation of a first wavelength.

**5.** A device according to claim 2, wherein said active substance produces a Raman spectrum as a result of inelastic scattering of said incident beam of radiation.

**6.** A device according to any preceding claim, wherein said tagging layer comprises quantum dots.

**7.** A device according to claim 5, wherein the molecules of the active substance are absorbed within or located proximate to a structured metal surface.

**8.** A device according to claim 7, wherein said tagging layer comprises nanoplasmonic resonators.

**9.** A device according to claim 7, wherein said tagging layer comprises gold nanoshells.

**10.** A system comprising an identification device as claimed in any preceding claim and a detection unit, the detection unit comprising:

a radiation source for generating an incident beam of radiation and directing said beam at the identification device.

**11.** A system as claimed in claim 10, wherein said detection unit comprises:

a detector for detecting a retroreflected beam of radiation from the identification device;
a store for storing a spectrum of radiation; and
a processing unit for comparing a spectrum of radiation in the retroreflected beam with the stored spectrum of radiation.

**12.** A system according to claim 10 or 11, wherein the tagging layer and the wavelength of the incident beam of radiation are selected such that the wavelength enhances the intensity of the received spectrum of radiation in the retroreflected beam.

**13.** A system according to any of claims 10 to 12, wherein the thickness of the tagging layer and the wavelength of radiation emitted by the radiation source are selected so that the tagging layer forms a resonant cavity tuned to the wavelength of the incident beam of radiation in order to increase absorption of radiation in the tagging layer.

**14.** A system according to any of claims 10 to 13, wherein the active substance or active substances and the radiation source are selected so that the wavelength of the incident beam of radiation causes resonance with electronic excited states of the active substance or substances in the tagging layer.

**15.** A system according to any of claims 10 to 14, wherein the tagging layer comprises molecules of said active substance which are absorbed within or located proximate to a structured surface comprising a metal; and
the radiation source and the metal are selected so that the wavelength of the incident beam of radiation is close to or at the plasma wavelength of the metal such that conduction electrons in the metal surface are excited into a state of surface plasmon resonance.

21

Reflector 22

Incident Light
14

GRIN Lens 20

Retro Reflected
Light
18

12

Tagging Material
24

16

10

FIG. 1

FIG. 2

FIG. 3

FIG. 4

FIG. 5

FIG.6

Europäisches
Patentamt

European
Patent Office

Office européen
des brevets

# EUROPEAN SEARCH REPORT

Application Number

EP 08 27 5073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2006/099317 A (MCGREW STEPHEN [US]) 21 September 2006 (2006-09-21) * abstract; claims 1-3,12; figures 3,5 * * paragraphs [0025], [0028], [0029], [0032], [0037], [0040], [0042] - [0044], [0046], [0047], [0049], [0051], [0070], [0073], [0074] * | 1-15 | INV. G01S17/74 G01N21/63 G02B5/126 |
| Y | WO 2005/022210 A (BAE SYSTEMS PLC [GB]; HANDEREK VINCENT ANDREI [GB]; LAYCOCK LESLIE CHA) 10 March 2005 (2005-03-10) * abstract; figure 1 * * page 2, lines 5-17 * * page 3, lines 13-22 * * page 5, line 7 - page 6, line 3 * | 1-15 | |
| Y | OLDENBURG S J ET AL: "SURFACE ENHANCED RAMAN SCATTERING IN THE NEAR INFRARED USING METAL NANOSHELL SUBSRATES" JOURNAL OF CHEMICAL PHYSICS, NEW YORK, NY, US, vol. 111, no. 10, 8 September 1999 (1999-09-08), pages 4729-4735, XP002933511 ISSN: 0021-9606 * abstract * section "I. Introduction" | 7-9,15 | TECHNICAL FIELDS SEARCHED (IPC) G01S G01N G02B G06K |
| Y | WO 2008/039912 A (EVIDENT TECHNOLOGIES [US]; MORRIS G MICHAEL [US]; CHAKMAKJIAN STEPHEN) 3 April 2008 (2008-04-03) * abstract; figure 4 * * paragraphs [0005], [0012], [0013], [0021], [0022], [0032] * | 1-15 | |

-/--

The present search report has been drawn up for all claims

| Place of search | Date of completion of the search | Examiner |
|---|---|---|
| Munich | 23 April 2009 | Grübl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 08 27 5073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JACKSON J B ET AL: "Controlling the surface enhanced Raman effect via the nanoshell geometry" APPLIED PHYSICS LETTERS, AIP, AMERICAN INSTITUTE OF PHYSICS, MELVILLE, NY, US, vol. 82, no. 2, 13 January 2003 (2003-01-13), pages 257-259, XP012034081 ISSN: 0003-6951 * abstract * * page 257 * | 7-9,15 | |
| Y,D | SMITH W E; MCCABE A; MCNAY G; GRAHAM D; SHAND N; FOULGER B: "Distance detection using Raman scattering: a new tagging technology" PROCEEDINGS OF THE SPIE, vol. 6402, 11 September 2006 (2006-09-11), pages 1-6, XP002524830 USA * pages 1,3 * | 7 | |

TECHNICAL FIELDS
SEARCHED (IPC)

The present search report has been drawn up for all claims

| Place of search | Date of completion of the search | Examiner |
|---|---|---|
| Munich | 23 April 2009 | Grübl, Alexander |

EPO FORM 1503 03.82 (P04C01)

**ANNEX TO THE EUROPEAN SEARCH REPORT
ON EUROPEAN PATENT APPLICATION NO.**                 EP 08 27 5073

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2009

| Patent document cited in search report | | Publication date | Patent family member(s) | | Publication date |
|---|---|---|---|---|---|
| WO 2006099317 | A | 21-09-2006 | EP | 1866676 A2 | 19-12-2007 |
| | | | US | 2009065583 A1 | 12-03-2009 |
| WO 2005022210 | A | 10-03-2005 | AT | 373248 T | 15-09-2007 |
| | | | DE | 602004008942 T2 | 19-06-2008 |
| | | | ES | 2291932 T3 | 01-03-2008 |
| | | | US | 2006109561 A1 | 25-05-2006 |
| WO 2008039912 | A | 03-04-2008 | US | 2008191604 A1 | 14-08-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• US 6610351 B

### Non-patent literature cited in the description

• **S. Nemoto ; J. Kida.** Retroreflector using gradient-index rods. *Appl. Opt.,* 01 March 1991, vol. 30 (7), 815-822
• **Y. Koike ; A. Kanemitsu ; Y. Shioda ; E. Nihei ; Y. Ohtsuka.** Spherical gradient-index polymer lens with low spherical aberration. *Appl. Opt.,* 01 June 1994, vol. 33 (17), 3394-3400
• **W.E. Smith et al.** Distance Detection using Raman Scattering - A New Tagging Technology. *SPIE,* 2006, vol. 6402
• **R.J. Stokes et al.** SERRS - Active Nanoparticle-Polymer Beads for Ultra-Sensitive Biodiagnostic Applications. *Micro & Nano Letters,* 2006, vol. 1 (1
• **S.J. Oldenburg et al.** Infrared Extinction Properties of Gold Nanoshells. *APL,* 1999, vol. 75 (19